# EUROPÄISCHE PATENTSCHRIFT

(11) **EP 1 923 818 B1**
(45) Veröffentlichungstag und Bekanntmachung des Hinweises auf die Patenterteilung: **24.06.2009**
(21) Anmeldenummer: 07020083.7
(22) Anmeldetag: 13.10.2007
(51) Int. Cl.: G06K 7/10

(54) **Barcodelesegerät**
Bar code reader
Appareil de lecture d'un code à barres

(30) Priorität: 18.11.2006 DE 102006054492
(43) Veröffentlichungstag der Anmeldung: 21.05.2008
(73) Patentinhaber: Leuze electronic GmbH + Co. KG, 73277 Owen/Teck (DE)
(72) Erfinder: Claus, Armin, 72622 Nürtingen (DE)
(74) Vertreter: Ruckh, Rainer Gerhard

(56) Entgegenhaltungen:
- DE-A1- 19 933 518
- US-A1- 2004 212 861
- US-B1- 6 612 493

## Beschreibung

Die Erfindung betrifft ein Barcodelesegerät mit einem Gehäuse, in welchem optische und elektronische Komponenten sowie ein elektrisches Heizelement mit einem Wärmeleitkörper angeordnet sind, wobei das Heizelement wärmeleitend mit dem Wärmeleitkörper verbunden ist.

Derartige Barcodelesegeräte zum Lesen von Barcodes werden beispielsweise als mobile Handgeräte oder stationäre Geräte an Förderanlagen im gewerblichen und industriellen Bereich eingesetzt. Die gelesenen Barcodes dienen zur Identifikation der Etikettierung verschiedenster Zwischen- oder Endprodukte, wie zum Beispiel Werkstücke, Bau- und Maschinenelemente, Gebrauchsgüter, Medikamente und Lebensmittel. Je nach dem Lagerort der zu identifizierenden Produkte macht sich der Einsatz der Barcodelesegeräte auch bei niedrigen Umgebungstemperaturen in unbeheizten Lagerhallen, auf Lagerplätzen im Außenbereich oder in Kühlhäusern erforderlich. Bei derartigen Anwendungsfällen können Umgebungstemperaturen herrschen, die weit unter 0°C liegen, in Kühlhäusern typischer Weise bis ca. - 40°C. Diese Anwendungsbedingungen führen zu Betriebsstörungen des Barcodelesegerätes, z.B. infolge des Beschlagens des Strahldurchtrittsfensters, der Linsen und Spiegel der optischen Komponenten und infolge des Funktionsausfalls der elektronischen Bauteile. Zu den thermisch empfindlichen, optischen Komponenten des Barcodelesegerätes zählen Komponenten mit vordergründig optischen Bauelementen, wie ein Sendelichtstrahlen emittierenden Sender mit beispielsweise einer Laserdiode, ein Empfangslichtstrahlen empfangenden Empfänger mit Photodiode o. dgl. sowie Umlenkspiegel und Ablenkeinheiten mit angetriebenen beweglichen Spiegeln zur periodischen Ablenkung der Sende- und Empfangslichtstrahlen. Eine solche Ablenkeinheit weist beispielsweise ein rotierendes Polygonspiegelrad oder einen Schwenkspiegel auf Eine störempfindliche elektronische Komponente des Barcodelesegerätes bildet beispielsweise die vornehmlich elektronische Bauteile zur Steuerung und Regelung umfassende integrierte Leiterplatte.

Um die Funktionsfähigkeit dieser optischen und elektronischen Komponenten des Barcodelesegerätes auch unter den kritischen Anwendungsbedingungen aufrecht zu erhalten, verfügen gattungsgemäße Barcodelesegeräte über ein im Gehäuse integriertes elektrisches Heizelement, um die Innentemperatur innerhalb des Gehäuse in einem zulässigen Betriebstemperaturbereich zu halten. Das integrierte Heizelement kann beispielsweise von einem Widerstandselement oder einem Halbleiterelement gebildet sein. Ergänzend verfügt das Strahldurchtrittsfenster über ein Scheibenheizelement, z.B. in Form von Heizdrähten, welche auf die Scheibe aufgebracht sind, um das Beschlagen des Strahldurchtrittsfensters zu vermeiden.

Gattungsgemäß ist das integrierte Heizelement mit einem Wärmeleitkörper verbunden, um die vom Heizelement erzeugte Wärme im Gehäuseinnenraum zu verteilen. Aus der Druckschrift DE 199 33 518 B4 ist ein Barcodelesegerät bekannt, der über ein Heizelement verfügt, welches auf einem wärmeleitenden Körper aufsitzt und in Wärmekontakt mit diesem steht. Der wärmeleitende Körper ist auf einer wärmeisolierenden Auflage des Gehäuses gelagert und vorzugsweise von einer Platte aus Aluminium gebildet. Die wärmeisolierende Auflage gewährleistet, dass die Platte in einem Abstand zum Gehäuse gehalten wird. Vorteilhaft erstreckt sich die Platte über weite Bereiche des Gehäuseinnenraumes in einem Abstand zu den optischen und elektronischen Komponenten. Die vom Heizelement erzeugte Wärme wird durch Wärmeleitung direkt auf den wärmeleitenden Körper in Plattengestalt übertragen, der wiederum die Wärme vorzugsweise durch Wärmestrahlung an das Innere des Gehäuses und damit an die optischen und elektronischen Komponenten abgibt. Die wärmeisolierende Auflage des Wärmeleitkörpers verhindert dabei einen Wärmeübergang durch Wärmeleitung an das Gehäuse, womit nahezu die gesamte Heizleistung des Heizelementes effektiv dazu verwendet wird, um die optischen und elektronischen Komponenten im Inneren des Gehäuses aufzuheizen. Für eine zusätzliche Wärmeverteilung sorgt die Anordnung der Platte oberhalb des Polygonspiegelrades, das infolge der Rotation eine Luftzirkulation im Gehäuseinneren erzeugt.

Trotz dieser Maßnahmen zur Wärmeverteilung wird die Wärme nicht genügend gleichmäßig im Innenraum des Gehäuses verteilt, so dass sich bei extrem niedrigen Umgebungstemperaturen örtlich erheblich unterschiedliche Innenraumtemperaturen einstellen.

So kann es sein, dass beispielsweise ein im Gehäuseinnenraum integrierter Temperatursensor eine Isttemperatur erfasst, die der Solltemperatur im zulässigen Betriebstemperaturbereich entspricht und infolgedessen das Abschalten des Heizelementes veranlasst oder die Betriebsbereitschaft des Barcodelesegerätes signalisiert wird, obwohl in bestimmten Bereichen des Gehäuseinnenraumes die zulässige Betriebstemperatur nicht erreicht wurde. Ist andererseits der Temperatursensor an einem solchen thermisch benachteiligten Bereich des Gehäuseinnenraumes platziert, wird zur Erreichung der zulässigen Betriebstemperatur an diesem Ort eine erheblich höhere Heizleistung des Heizelementes erforderlich, die zudem zu einer unnötigen Übertemperierung der thermisch günstiger gelegenen optischen und elektronischen Komponenten führt. Das erhöht nicht nur den Energieverbrauch, sondern führt zur thermischen Überlastung, insbesondere der elektronischen Bauteile, und zum vorzeitigen Verschleiß des Heizelementes. Außerdem stellt der Platzbedarf der sich über weite Bereiche des Gehäuseinnenraumes erstreckenden Platte eine konstruktive Einschränkung für das Barcodelesegerät dar.

Der Erfindung liegt daher die Aufgabe zugrunde, die Wärmeverteilung in einem gattungsgemäßen Barcodelesegerät mit geringem energetischem und konstruktivem Aufwand zu verbessern.

Die Aufgabe wird erfindungsgemäß mit den Merkmalen des Patentanspruches 1 gelöst. Die in den Unteransprüchen 2 bis 17 aufgeführten Maßnahmen beschreiben vorteilhafte Ausgestaltungen des erfindungsgemäßen Barcodelesegerätes.

Bei dem erfindungsgemäßen Barcodelesegeräte ist der Wärmeleitkörper von einer Aufnahmekonsole zur Halterung der optischen und/oder elektronischen Komponenten gebildet.

Damit erübrigen sich die konstruktiven Aufwendungen für die Installation eines gesonderten Wärmeleitkörpers im Innenraum des Gehäuses. Die ohnehin notwendige Tragekonstruktion für die Halterung der optischen und/oder elektronischen Komponenten im Gehäuse übernimmt in Form einer Aufnahmekonsole zugleich die Funktion des Wärmeleitkörpers. Aus dem statischem Erfordernis einer zentralen Halterung für die optischen und/oder elektronischen Komponenten ergibt sich, dass die Aufnahmekonsole verzweigt oder flächig übergreifend den gesamten Innenraum des Gehäuses überspannt. In gleichzeitiger Funktion als Wärmeleitkörper - wobei die Aufnahmekonsole vorzugsweise aus gut wärmeleitenden Metall, insbesondere Zink oder Aluminium bestehtwird die Wärme sehr effektiv im Innenraum des Gehäuses verteilt.

Sind die optischen und/oder elektronischen Komponenten zudem wärmeleitend mit der Aufnahmekonsole verbunden, kann die Wärme auf energetisch günstigem Wege durch Wärmeleitung über die wärmeleitende Aufnahmekonsole und wärmeleitenden Verbindungselemente zu den optischen und elektronischen Komponenten gelangen. Die Wärmeübertragung auf die optischen und elektronischen Komponenten erfolgt somit weniger durch die energetisch aufwändigere Wärmestrahlung nach bisherigem Ausführungen im Stand der Technik als vielmehr durch Wärmeleitung innerhalb der wärmeleitenden Materialien von Aufnahmekonsole und Verbindungselemente.

Des Weiteren ist es vorteilhaft, wenn die Aufnahmekonsole wärmeisolierend mit dem Gehäuse verbunden ist. Somit entsteht nahezu kein Wärmeverlust an die Umgebung des Barcodelesegerätes infolge der Wärmeleitung von der Aufnahmekonsole zum Gehäuse.

In einer günstigen Ausgestaltung weist die Aufnahmekonsole zumindest einen Steg auf, der in den Gehäuseinnenraum zwischen den optischen und elektronischen Komponenten ragt. Diese Stege unterstützen als wärmeübertragende Flächen die Wärmeleitung durch zusätzlichen konvektiven Wärmeübergang von den Oberflächen der Aufnahmekonsole an den Luftraum des Gehäuseinnenraumes.

Ist einer oder mehrere der Stege in unmittelbarer Nähe zu der optischen Komponente angeordnet, die einen beweglich angetriebenen Spiegel, vorzugsweise ein rotierendes Polygonspiegelrad aufweist, kann die mit der Bewegung des Spiegels erzeugte Luftströmung im Gehäuseinneren zum einen die wärmeübertragende Konvektionswirkung an den Stegen erhöhen und zusätzlich die abgegebene Wärme gut im Innenraum des Gehäuses verteilen. Insbesondere kann die Konvektionswirkung dadurch erhöht werden, wenn der Steg derart gestaltet ist, dass er das Polygonspiegelrad zumindest teilweise umfasst. Somit erreicht die Luftventilation große Flächenabschnitte des Steges, ohne das der Steg die optische Funktion des beweglichen Spiegels behindert.

Besonders vorteilhaft ist, dass die Aufnahmekonsole mindestens ein Halteelement aufweist, an welches das Heizelement ansteckbar, anschraubbar oder einrastbar ist. Somit ermöglicht sich ein bequemer Austausch des Heizelementes z.B. zu Wartungszwecken oder bei Verschleiß. Sind mehrere Halteelemente vorgesehen, kann die Platzierung des Heizelementes je nach Bedarf örtlich variiert werden. Ist beispielsweise die eigens erzeugte Verlustwärme der einzelnen optischen und elektronischen Komponenten annähernd gleich, ist eine zentrale Anordnung des Heizelementes an einer zentralen Mittenposition der Aufnahmekonsole zur effektiven Wärmeverteilung der durch das Heizelement erzeugten Wärme günstig, da hierdurch die Wärme gleichermaßen in alle Richtungen verteilt wird.

Da in der nahen Umgebung des Heizelementes die Übertemperatur der wärmeleitenden Aufnahmekonsole gegenüber dem Luftraum des Gehäuseinnenraumes am größten ist, erreicht dort auch die konvektive Wärmeübertragung der Aufnahmekonsole, insbesondere der Stege, ihr Optimum. Somit wirkt es sich verstärkend auf Konvektionswirkung aus, wenn das Heizelement in einem Nahbereich zum beweglich angetriebenen Spiegel, vorzugsweise an einem nahe gelegenen Steg, angeordnet ist.

In einer besonders vorteilhaften Ausgestaltung sind mehrere, Heizelemente vorgesehen, die mittels einer zentralen Steuer- und Regeleinheit modular schaltbar sind. Das erlaubt nicht nur eine günstige verteilte Anordnung der Wärmequellen sondern ermöglicht auch ein selektives Zu- bzw. Abschalten von Heizelementen, je nach Bedarf und Einsatzbedingungen des Barcodelesegerätes. Insbesondere bei größeren Barcodelesegeräten, z.B. bei Barcodelesegeräten mit Schwenkspiegel, kann mittels dieses modularen Aufbaus der Heizelemente eine gezielte und gleichmäßigere Wärmeverteilung erreicht werden. Durch die dezentrale Verteilung der Wärmeleistung wird zudem eine örtliche thermische Überlastung der optischen und elektronischen Komponenten vermieden.

Ist ein Scheibenheizelement zur Beheizung einer Strahldurchtrittsscheibe vorgesehen, ist es vorteilhaft, wenn dieses Scheibenheizelement mittels der zentralen Steuer- und Regeleinheit modular zu den Heizelementen schaltbar ist. Bei bestimmten Witterungsbedingungen ist es möglich, dass die Strahldurchtrittsscheibe beschlägt, obwohl die Umgebungstemperatur innerhalb des zulässigen Betriebstemperaturbereiches des Barcodelesegerätes liegt. Die modulare Betriebsweise der zentralen Steuer- und Regeleinheit erlaubt das Scheibenheizelement separat zu den Heizelementen zu betreiben. Als Maßnahme gegen das Beschlagen genügt die geringe Heizleistung des Scheibenheizelementes, die übrigen Heizelemente müssen nicht zugeschaltet werden. Damit wird für derartige, nicht selten auftretende Einsatzfälle, weniger Heizenergie verbraucht und zugleich der Verschleiß der Heizelemente gemindert. Zudem wird eine unnötige thermische Überlastung der optischen und elektronischen Komponenten vermieden.

Das erfindungsgemäße Barcodelesegerät wird nachfolgend an einem Ausführungsbeispiel näher erläutert. Die zugehörigen Zeichnungen zeigen in einer schematischen Darstellung in
- Figur 1: eine Draufsicht auf den Innenaufbau des erfindungsgemäßen Barcodelesegerätes nach dem Ausführungsbeispiel und in
- Figur 2: eine Seitenansicht auf den Innenaufbau des erfindungsgemäßen Barcodelesegerätes nach dem Ausführungsbeispiel.

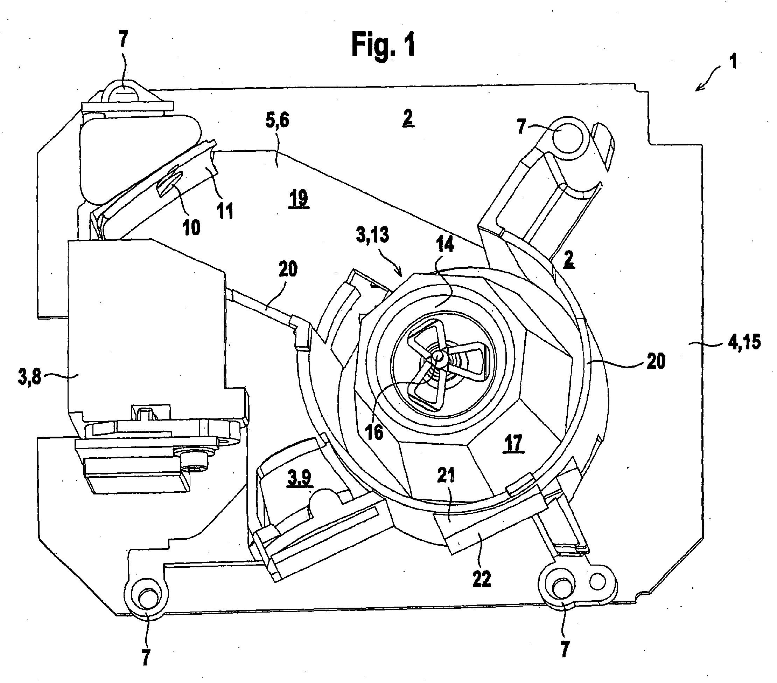

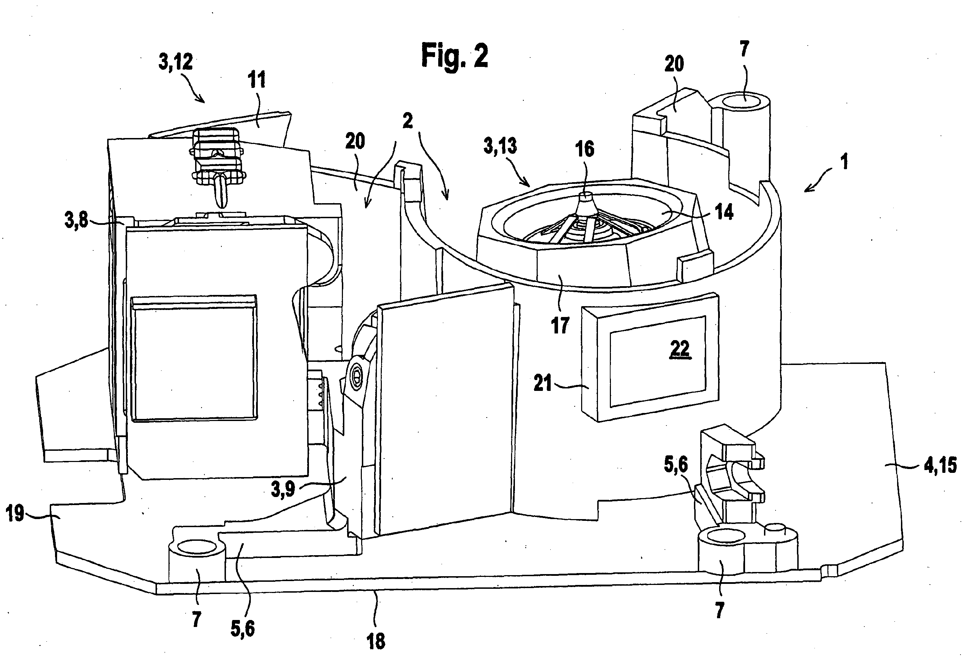

Zur besseren Veranschaulichung der Erfindung ist in Fig. 1 und 2 das Barcodelesegerät 1 ohne sein Gehäuse dargestellt, wodurch eine Einsichtnahme auf den Innenraum 2 des Gehäuses mit dem Innenaufbau des Barcodelesegerätes 1 ermöglicht ist. Der Innenaufbau des Barcodelesegerätes umfasst optische und elektronische Komponenten 3, 4, die gemeinsam von einer Aufnahmekonsole 5 gehalten sind. Die Aufnahmekonsole 5 dient zum einen als Tragegestell zur befestigten Anordnung der optischen und elektronischen Komponenten 3, 4 im Innenraum 2 des Gehäuses und zum anderen als Wärmleitkörper 6. Die gestellartige Aufnahmekonsole 5 besteht aus stabilem und wärmeleitenden Material, wie zum Beispiel Zink, und erstreckt sich in ausladender, gliedriger Gestalt im Wesentlichen über die gesamten Ausdehnung des Gehäuseinnenraumes 2 des Barcodelesegerätes 1. An ihre äußeren Enden weist die Aufnahmekonsole 5 Befestigungsbohrungen 7 auf, mittels derer die Aufnahmekonsole 5 mit einem nicht dargestellten Gehäuseboden und -deckel thermisch isolierend verbunden wird.

Als optische Komponenten 3 im Sinne dieser Erfindung sind solche, mit im Wesentlichen optischen Bauelementen ausgestatteten Funktionseinheiten des Barcodelesegerätes 1 bezeichnet. Die optischen Komponenten 3 im vorliegenden Ausführungsbeispiel des erfindungsgemäßen Barcodelesegerätes 1 sind ein Sendelichtstrahlen emittierender Sender 9 mit vorzugsweise einer Laserdiode, ein Empfangslichtstrahlen empfangender Empfänger 8 mit beispielsweise einer Photodiode, ein aus Umlenk- und Hohlspiegel 10, 11 bestehender Spiegel sowie eine Ablenkeinheit 13 mit einem Polygonspiegelrad 14. Elektronische Bauteile, wie z.B. die Auswerteeinheit zur Verarbeitung der Empfängerlichtstrahlen und Erkennung des Barcodes sind hauptsächlich auf der zentralen Leiterplatte 15 vereint, die wegen ihrer vornehmlichen Ausstattung mit elektronischen Bauteilen eine wesentliche elektronische Komponente 4 des Barcodelesegerätes 1 bildet.

Die Sendestrahlen, ausgesendet vom Sender 9, werden über den Umlenkspiegel 10 umgelenkt und über die Ablenkeinheit 13 geführt. Das Polygonspiegelrad 14 der Ablenkeinheit 13, angetrieben von einem nicht dargestellten Motor, rotiert mit bestimmter Drehzahl um eine Rotationsachse 16. Die polygon gestaltete Umfangsfläche des Polygonspiegelrades 14 erzeugt eine periodische Ablenkung des Sendelichtstrahles in einem bestimmten Reflexionswinkelbereich. Die Sendelichtstrahlen durchdringen anschließend ein Strahldurchtrittsfenster im nicht dargestellten Gehäuse und erreichen den zu erkennenden Barcode in einem dem Reflexionswinkelbereich entsprechenden Erfassungsbereich. In der nicht dargestellten, alternativen Ausstattung des Barcodelesegerätes 1 mit einem Zusatzmodul mit optische Zusatzkomponente, werden die Sendelichtstrahlen vor Austritt aus dem Strahldurchtrittsfenster über eine Ablenkeinheit mit Schwenkspiegel geleitet. Somit werden die Sendelichtstrahlen in einem durch eine zweite Dimension überlagerten Reflexionswinkelbereiches periodisch abgelenkt.

Die von dem Barcode reflektierten Empfängerlichtstrahlen verlaufen im Wesentlichen in umgekehrter Richtung durch das Strahldurchtrittsfenster, werden gegebenenfalls vom Schwenkspiegel und anschließend vom Polygonspiegelrad 14 abgelenkt und auf den Hohlspiegel 11 geleitet, der den Empfängerlichtstrahl fokussiert dem Empfänger 8 zuführt. In der Auswerteeinheit werden die durch die Strichmuster der Barcodes amplitudenmodulierten Empfängerlichtstrahlen in elektrische Signale umgewandelt, dekodiert und ausgewertet.

Die vorbeschriebenen optischen Komponenten 3 und die Leiterplatte 15 sind wärmeleitend mit der Aufnahmekonsole 5 verbunden. Dabei ist die Leiterplatte 15 teilweise bündig an einer flächigen Unterseite 18 der Aufnahmekonsole 5 befestigt und steht so in Wärmekontakt mit der Aufnahmekonsole 5. Sender 9,

Empfänger 8, Umlenkspiegel 10 und Ablenkeinheit 13 sind direkt mit der Aufnahmekonsole 5 verbunden. Somit kann die Wärme sehr gut durch Wärmeleitung zu den optischen und elektronischen Komponenten 3, 4 übertragen werden. Gleichzeitig ist die Einheit aus Aufnahmekonsole 5, optischer Komponenten 3 und Leiterplatte 15 gegenüber dem umgebenden Gehäuse thermisch isoliert, um Wärmeverlust an die Umgebung durch Wärmeleitung an das Gehäuse zu vermeiden. Dazu werden beispielsweise Auflagen oder Abstandshalter (nicht ersichtlich) aus wärmeisolierendem Material zwischen der Aufnahmekonsole 5 und den Gehäuseteilen, insbesondere im Bereich der Befestigungsbohrungen 7, vorgesehen.

Die Aufnahmekonsole 5 erstreckt sich nicht nur flächig im Gehäuseinnenraum 2 des Barcodelesegerätes 1 sondern verfügt an ihrer Oberseite 19 über auskragende Stege 20, die zwischen die optischen Komponenten 3 in den Gehäuseinnenraum 2 ragen. Sie fördern den konvektiven Wärmeübergang an die Luft des Gehäuseinnenraumes 2 in Ergänzung zur Wärmeleitung entlang der Aufnahmekonsole 5. Der in unmittelbarer Nähe zum Polygonspiegelrad 14 verlaufene Steg 20 umschließt das Polygonspiegelrad 14 kreisförmig und fast vollständig, so dass hier der konvektive Wärmeübergang durch die vom Polygonspiegelrad 14 erzeugte Luftströmung unterstützt wird.

An diesem Steg 20, gut ersichtlich in Fig. 2, befindet sich ein Haltelement 21, an dem ein Heizelement 22 lösbar montiert wird. Über die Verbindung zum Haltelement 21 steht das Heizelement 22 in wärmeleitenden Kontakt mit der Aufnahmekonsole 5. Das elektrische Heizelement 22 dient als Wärmequelle für die Beheizung der optischen und elektronischen Komponenten 3, 4 des Barcodelesegerätes 1 mittels der Aufnahmekonsole 5 in der vorbeschriebenen Weise. Das vorliegende Ausführungsbeispiel zeigt nur ein Haltelement 21 für die Anordnung eines Heizelementes 22, wobei die Erfindung nicht darauf beschränkt ist und die Anordnung mehrerer Heizelemente 22 mittels weiterer Halteelemente 21 an verschiedenen Stellen der Aufnahmekonsole 5 ohne weiteres denkbar ist. Das elektrische Heizelement 22 enthält beispielsweise ein PTC-Widerstandselement oder ein Halbleiterelement und kann gegebenenfalls neben anderen Heizelementen 22 mittels eines Mikrocontrollers als Steuer- und Regeleinheit modular geschalten und geregelt werden. Der Istwert der Temperatur im Gehäuseinnenraum 2 wird über einen darin befindlichen Temperatursensor erfasst und mit einem Sollwert verglichen. Entsprechend der Regelabweichung wird die Heizleistung des Heizelementes 22 oder der Heizelemente 22 angesteuert.

In der Doppelfunktion der Aufnahmekonsole 5 als Tragegestell und Wärmeleitkörper 6 wird die Wärme ausgehend von der Wärmequelle konstruktiv und energetisch günstig zu den optischen und elektronischen Komponenten 3, 4 transportiert und gleichsam im gesamten Gehäuseinnenraum 2 verteilt. Die besonderen Ausgestaltungen der Aufnahmekonsole 5 im Zusammenwirken mit dem Heizelement 22 verbessert die energetisch günstige Wärmeverteilung in vorbeschriebener Weise.

### Bezugszeichenliste

- (1): Barcodelesegerät
- (2): Innenraum des Gehäuses, Gehäuseinnenraum
- (3): optische Komponente
- (4): elektronische Komponente
- (5): Aufnahmekonsole
- (6): Wärmleitkörper
- (7): Befestigungsbohrung
- (8): Empfänger
- (9): Sender
- (10): Umlenkspiegel
- (11): Hohlspiegel
- (13): Ablenkeinheit
- (14): beweglicher Spiegel, Polygonspiegelrad
- (15): Leiterplatte
- (16): Rotationsachse
- (17): polygone Umfangsfläche
- (18): Unterseite der Aufnahmekonsole
- (19): Oberseite der Aufnahmekonsole
- (20): Steg
- (21): Haltelement
- (22): Heizelement

## Patentansprüche

1. Barcodelesegerät mit einem Gehäuse, in welchem optische und elektronische Komponenten sowie ein zum Halten der Innentemperatur Innerhalb des Gehäuses in einem zulässigen Betriebstemperaturbereich vorgesehenes elektrisches Heizelement mit einem Wärmeleitkörper angeordnet sind, wobei das Heizelement wärmeleitend mit dem Wärmeleitkörper verbunden ist, **dadurch gekennzeichnet, dass** der Wärmeleitkörper (6) von einer Aukahmekonsole (5) zur Halterung der optischen (3) und/oder elektronischen Komponenten (4) gebildet ist.

2. Barcodelesegerät nach Anspruch 1, **dadurch gekennzeichnet, dass** die optischen (3) und/oder elektronischen Komponenten (4) wärmeleitend mit der Aufnahmekonsole (5) verbunden sind.

3. Barcodelesegerät nach einem der Ansprüche 1 oder 2, **dadurch gekennzeichnet, dass** die Aufnahmekonsole (5) wärmeisolierend mit dem Gehäuse verbunden ist.

4. Barcodelesegerät nach einem der Ansprüche 1 bis 3, **dadurch gekennzeichnet, dass** die Aufnahmekonsole (5) zumindest einen Steg (20) aufweist, der in einen Gehäuseinnenraum (2) zwischen den optischen und elektronischen Komponenten (3, 4) ragt.

5. Barcodelesegerät nach Anspruch 4, **dadurch gekennzeichnet, dass** eine optische Komponente (3) von einer Ablenkeinheit (13) mit einem beweglich angetriebenen Spiegel (14) gebildet ist, wobei der mindestens ein Steg (20) in unmittelbarer Nähe des beweglich angetriebenen Spiegels (14) angeordnet ist.

6. Barcodelesegerät nach Anspruch 5, **dadurch gekennzeichnet, dass** der beweglich angetriebene Spiegel (14) als Polygonspiegelrad (14) ausgebildet ist und der Steg (20) derart gestaltet ist, dass er das Polygonspiegelrad (14)zumindest teilweise umfasst.

7. Barcodelesegerät nach einem der Ansprüche 1 bis 6, **dadurch gekennzeichnet, dass** die Aufnahmekonsole (5) aus Metall besteht.

8. Barcodelesegerät nach einem der Ansprüche 1 bis 7, **dadurch gekennzeichnet, dass** das Heizelement mit der Aufnahmekonsole (5) lösbar verbunden ist.

9. Barcodelesegerät nach Anspruch 8, **dadurch gekennzeichnet, dass** die Aufnahmekonsole (5) mindestens ein Halteelement (21) aufweist, an welches das Heizelement ansteckbar, aufschraubbar oder einrastbar ist.

10. Barcodelesegerät nach einem der Ansprüche 1 bis 9, **dadurch gekennzeichnet, dass** das Heizelement an einer zentralen Mittenposition der Aufnahmekonsole (5) angeordnet ist.

11. Barcodelesegerät nach einem der Ansprüche 5 bis 10, **dadurch gekennzeichnet, dass** das Heizelement in einem Nahbereich zum beweglich angetriebenen Spiegel (14), vorzugsweise an einem dem beweglich angetriebenen Spiegel (14) nahe gelegenem Steg (20), angeordnet ist.

12. Barcodelesegerät nach einem der Ansprüche 1 bis 11, **dadurch gekennzeichnet, dass** mehrere Heizelemente vorgesehen sind, die mittels einer zentralen Steuer- und Regeleinheit modular schaltbar sind.

13. Barcodelesegerät nach Anspruch 12, **dadurch gekennzeichnet, dass** die Heizleistung der Heizelemente regelbar ist.

14. Barcodelesegerät nach Anspruch 13, **dadurch gekennzeichnet, dass** mittels eines Temperatursensors eine Temperatur im Gehäuseinnenraum (2) als Istwert erfassbar ist und die Heizleistung der Heizelemente in Abhängigkeit des Istwertes zu einem Sollwert der Temperatur im Gehäuseinnenraum (2) regelbar ist.

15. Barcodelesegerät nach einem der Ansprüche 12 bis 14, **dadurch gekennzeichnet, dass** ein Scheibenheizelement zur Beheizung einer Strahldurchtrittsscheibe vorgesehen ist, welches mittels der zentralen Steuer- und Regeleinheit modular zu den Heizelementen schaltbar ist.

16. Barcodelesegerät nach einem der Ansprüche 1 bis 15, **dadurch gekennzeichnet, dass** dieses mit einem Zusatzmodul mit optischer und/oder elektronischer Zusatzkomponente kombinierbar ist, wobei ein wärmeleitender Träger der optischen und/oder elektronischen Zusatzkomponente wärmeleitend mit der Aufnahmekonsole (5) verbindbar ist.

17. Barcodelesegerät nach Anspruch 16, **dadurch gekennzeichnet, dass** die optische Zusatzkomponente von einer Ablenkeinheit mit einem beweglich angetriebenen Spiegel, vorzugsweise einem Schwenkspiegel, gebildet ist.

## Claims

1. Barcode reader with a housing, in which optical and electronic components as well as an electrical heating element, which is provided for keeping the interior temperature within the housing within a permissible operating temperature range, with a heat conducting body, wherein the heating element is thermally conductively connected with heat conducting body, **characterised in that** the heat conducting body (6) is formed by a mounting bracket (5) for mounting the optical components (3) and/or electronic components (4).

2. Barcode reader according to claim 1, **characterised in that** the optical components (3) and/or electronic components (4) are thermally conductively connected with the mounting bracket (5).

3. Barcode reader according to one of claims 1 and 2, **characterised in that** the mounting bracket (5) is connected with the housing to be thermally insulated relative thereto.

4. Barcode reader according to any one of claims 1 to 3, **characterised in that** the mounting bracket (5) has at least one web (20) which projects into a housing interior space (2) between the optical and electronic components (3, 4).

5. Barcode reader according to claim 4, **characterised in that** one optical component (3) is formed by a deflecting unit (13) with a movably driven mirror (14), wherein the at least one web (20) is arranged in the immediate vicinity of the movably driven mirror (14).

6. Barcode reader according to claim 5, **characterised in that** the movably driven mirror (14) is constructed as a polygon mirror wheel (14) and the web (20) is so designed that it at least partly surrounds the polygon mirror wheel (14).

7. Barcode reader according to any one of claims 1 to 6, **characterised in that** the mounting bracket (5) consists of metal.

8. Barcode reader according to any one of claims 1 to 7, **characterised in that** the heating element is detachably connected with the mounting bracket (5).

9. Barcode reader according to claim 8, **characterised in that** the mounting bracket (5) comprises at least one mounting element (21) at which the heating element can be plugged, screwed on or detented.

10. Barcode reader according to any one of claims 1 to 9, **characterised in that** the heating element is arranged at a central middle position of the mounting bracket (5).

11. Barcode reader according to any one of claims 5 to 10, **characterised in that** the heating element is arranged in a near region with respect to the movably driven mirror (14), preferably at a web (20) disposed near the movably driven mirror (14).

12. Barcode reader according to any one of claims 1 to 11, **characterised in that** several heating elements are provided, which are switchable in modular manner by means of a central control and regulating unit.

13. Barcode reader according to claim 12, **characterised in that** the heat output of the heating elements is regulable.

14. Barcode reader according to claim 13, **characterised in that** a temperature in the housing interior space (2) is detectable as an actual value by means of a temperature sensor and the heat output of the heating elements is regulable in dependence on the actual value to a target value of the temperature in the housing interior space (2).

15. Barcode reader according to any of claims 12 to 14, **characterised in that** a pane heating element for heating a beam penetration pane is provided, which is switchable by means of the central control and regulating unit in modular manner to the heating elements.

16. Barcode reader according to any one of claims 1 to 15, **characterised in that** this can be combined with an additional module with additional optical and/or electronic components, wherein a thermally conductive carrier of the additional optical and/or electronic components is thermally conductively connectible with the mounting bracket (5).

17. Barcode reader according to claim 16, **characterised in that** the additional optical components are formed by a deflector unit with a movably driven mirror, preferably a pivot mirror.

## Revendications

1. Lecteur de codes à barres avec un boîtier dans lequel sont disposés des composants optiques et électroniques ainsi qu'un élément chauffant électrique destiné à maintenir la température intérieure du boîtier dans une plage de température de fonctionnement admissible et comportant un corps conducteur de chaleur, l'élément chauffant étant relié de manière thermoconductrice au corps conducteur de chaleur, **caractérisé en ce que** le corps conducteur de chaleur (6) est formé par une console réceptrice (5) servant à maintenir les composants optiques (3) et/ou électroniques (4).

2. Lecteur de codes à barres selon la revendication 1, **caractérisé en ce que** les composants optiques (3) et/ou électroniques (4) sont reliés de manière thermoconductrice à la console réceptrice (5).

3. Lecteur de codes à barres selon l'une des revendications 1 ou 2, **caractérisé en ce que** la console réceptrice (5) est reliée de manière thermo-isolante au boîtier.

4. Lecteur de codes à barres selon l'une des revendications 1 à 3, **caractérisé en ce que** la console réceptrice (5) présente au moins une nervure (20) qui se dresse dans un espace intérieur de boîtier (2) entre les composants optiques et électroniques (3, 4).

5. Lecteur de codes à barres selon la revendication 4, **caractérisé en ce qu'**un composant optique (3) est formé par une unité de déviation (13) comportant un miroir (14) entraîné en déplacement, ladite au moins une nervure (20) étant disposée à proximité immédiate du miroir (14) entraîné en déplacement.

6. Lecteur de codes à barres selon la revendication 5, **caractérisé en ce que** le miroir (14) entraîné en déplacement est réalisé sous forme de roue à miroir polygonal (14) et la nervure (20) formée de façon qu'elle entoure au moins partiellement la roue à miroir polygonal (14).

7. Lecteur de codes à barres selon l'une des revendications 1 à 6, **caractérisé en ce que** la console réceptrice (5) est en métal.

8. Lecteur de codes à barres selon l'une des revendications 1 à 7, **caractérisé en ce que** l'élément chauffant est relié de manière détachable à la console réceptrice (5).

9. Lecteur de codes à barres selon la revendication 8, **caractérisé en ce que** la console réceptrice (5) présente au moins un élément de support (21) sur lequel l'élément chauffant peut être enfiché, vissé ou encliqueté.

10. Lecteur de codes à barres selon l'une des revendications 1 à 9, **caractérisé en ce que** l'élément chauffant est disposé à une position centrale de la console réceptrice (5).

11. Lecteur de codes à barres selon l'une des revendications 5 à 10, **caractérisé en ce que** l'élément chauffant est disposé dans une région proche du miroir (14) entraîné en déplacement, de préférence sur une nervure (20) située à proximité du miroir (14) entraîné en déplacement.

12. Lecteur de codes à barres selon l'une des revendications 1 à 11, **caractérisé en ce qu'**il est prévu plusieurs éléments chauffants qui sont commutables de manière modulaire au moyen d'une unité de commande et de régulation centrale.

13. Lecteur de codes à barres selon la revendication 12, **caractérisé en ce que** la puissance de chauffage des éléments chauffants est réglable.

14. Lecteur de codes à barres selon la revendication 13, **caractérisé en ce qu'**une température dans l'espace intérieur de boîtier (2) peut être saisie en tant que valeur réelle au moyen d'un capteur de température et la puissance de chauffage des éléments chauffants est réglable en fonction de la valeur réelle par rapport à une valeur de consigne de la température dans l'espace intérieur de boîtier (2).

15. Lecteur de codes à barres selon l'une des revendications 12 à 14, **caractérisé en ce qu'**il est prévu un élément chauffant de vitre pour chauffer une vitre de passage de faisceau, lequel est commutable de manière modulaire par rapport aux éléments chauffants au moyen de l'unité de commande et de régulation centrale.

16. Lecteur de codes à barres selon l'une des revendications 1 à 15, **caractérisé en ce que** celui-ci est combinable avec un module supplémentaire pourvu d'un composant optique et/ou électronique supplémentaire, un support thermoconducteur du composant optique et/ou électronique supplémentaire pouvant être relié de manière thermoconductrice à la console réceptrice (5).

17. Lecteur de codes à barres selon la revendication 16, **caractérisé en ce que** le composant optique supplémentaire est formé par une unité de déviation comportant un miroir entraîné en déplacement, de préférence un miroir orientable.
